# EUROPEAN PATENT APPLICATION

(11) **EP 3 372 776 A2**
(43) Date of publication of application: **12.09.2018**
(21) Application number: 18160289.7
(22) Date of filing: 06.03.2018
(51) Int. Cl.: E06B 9/72

(54) **BATTERY PACK FOR A MOTORIZED ARCHITECTURAL STRUCTURE COVERING**

(30) Priority: 09.03.2017 US 201762469308 P; 09.03.2017 US 201762469134 P; 27.11.2017 US 201762590804 P
(71) Applicant: Hunter Douglas Inc., Pearl River, New York 10965 (US)
(72) Inventor: BRACE, Clark D., Pearl River, NY New York 10965 (US); COOPER, Charles Culver Gidden, Pearl River, NY New York 10965 (US); NELSON, Todd Michael, Pearl River, NY New York 10965 (US); LORENZ, Douglas, Pearl River, NY New York 10965 (US); THORNE, Ian Bradley, Pearl River, NY New York 10965 (US); SCHIFFNER, Bryan Jeremy, Pearl River, NY New York 10965 (US); GITARTS, Lilly, Pearl River, NY New York 10965 (US); ZAGONE, Peter, Pearl River, NY New York 10965 (US)
(74) Representative: J A Kemp

(57) **Abstract**

A battery pack (200) for use with a motorized architectural structure covering (100) is illustrated. The battery pack (200) includes a battery tube (210), and first and second end caps (240, 260). The battery tube (210) includes a valley portion (222) located between first and second battery cavities (218, 220) for receiving first and second rows of batteries (50). The second end cap (260) includes one or more projections (282) (e.g., first and second tabs (286), handle, etc.) to facilitate removal of the battery pack (200) from mounting clips (132) associated with the motorized architectural structure covering (100). The removable, second end cap (260) may include first and second release buttons (270) extending into the valley portion (222). The release buttons (270) may have a wider portion adjacent to the second end cap (260), and a narrower portion extending at least partially into the valley portion (222). The release buttons (270) preferably include a tapered, for example, triangular, or trapezoidal shape, to extend into the valley portion (222) for facilitating user engagement therewith.

## Description

### CROSS-REFERENCE TO RELATED APPLICATIONS

This application claims priority to pending U.S. Provisional Patent Application Serial No. 62/469,134, filed March 9, 2017, titled "Battery Pack for a Motorized Architectural Structure Covering", and claims priority to pending U.S. Provisional Patent Application Serial No. 62/469,308, filed March 9, 2017, titled "Battery Pack for a Motorized Architectural Structure Covering", and claims priority to pending U.S. Provisional Patent Application Serial No. 62/590,804, filed November 27, 2017, titled "Battery Pack for a Motorized Architectural Structure Covering", the entirety of which applications are incorporated by reference herein.

### FIELD OF THE DISCLOSURE

The present disclosure relates generally to the field of architectural structure coverings, and relates more particularly to a battery pack for use in a motorized architectural structure covering.

### BACKGROUND

Architectural structure coverings may selectively cover a window, a doorway, a skylight, a hallway, a portion of a wall, etc. Generally speaking, horizontal architectural structure coverings may come in a variety of configurations. One type of architectural structure covering may include a motorized controller to lower or raise a covering portion. For example, a motorized drive motor (e.g., an electric motor) can be provided to move the covering portion between an extended position, and a retracted position.

Many known motorized drive motors require power, such as 120 volts, etc., from the facility in which the motorized architectural structure covering is installed to power the motor and control electronics. More recently, battery-powered architectural structure coverings have been introduced. The batteries for these architectural structure coverings can be mounted within, above, or adjacent to the mounting bracket, headrail, fascia, etc. The architectural structure covering may further include brackets for coupling the battery to the architectural structure covering. Unfortunately, these battery-powered systems suffer from many drawbacks, including, for example, requiring the end user to access the battery pack to replace the batteries.

This drawback is compounded by the fact that the battery pack is often coupled to the architectural structure covering behind the headrail associated with the architectural structure covering, and optionally also behind the covering portion, so that the battery pack is concealed. Alternatively, the battery pack may be coupled to the inside surface of the headrail. By concealing the battery pack behind the headrail, and optionally behind the covering portion as well, accessing and removing the battery pack is rendered more difficult, especially since it takes more power to raise the covering portion than lowering the covering portion, which tends to result in the battery pack being more likely to fail when the covering portion is in the extended position, thus requiring the user to reach behind the extended covering portion and the headrail to access the battery pack.

Accordingly, there is need for an improved battery pack wherein the battery pack and the associated batteries located therein are more easily accessible. It is with respect to these and other considerations that the present improvements may be useful.

### SUMMARY

This Summary is provided to introduce a selection of concepts in a simplified form that are further described below in the Detailed Description. This Summary is not intended to identify key features or essential features of the claimed subject matter, nor is it intended as an aid in determining the scope of the claimed subject matter.

Disclosed herein is an improved battery pack for use with a motorized architectural structure covering. The battery pack may include a battery tube having a first end, a second end, and an internal cavity arranged and configured to receive a plurality of batteries therein. The battery pack may also include a first end cap coupled to the first end of the battery tube, and a second end cap coupled to the second end of the battery tube, the second end cap being removably coupled to the second end of the battery tube to enable access to the plurality of batteries contained within the battery pack. The second end cap may also include one or more projections extending from an outer surface thereof for facilitating removal of the battery pack. By incorporating the one or more projections, the user can more easily access, and contact, catch, or latch onto the battery pack, thus pivoting the battery pack downwards for disengaging the battery pack from, for example, one or more mounting clips associated with the motorized architectural structure covering.

In one example embodiment, the battery tube may include first and second cavities interconnected via an intermediate valley portion. The valley portion being narrower than the first and second cavities. The first cavity being configured to receive a first row of batteries while the second cavity may be configured to receive a second row of batteries. The second end cap including first and second release buttons for releasing the second end cap from the second end of the battery tube. The first and second release buttons preferably include a wider portion adjacent the second end cap and a narrower portion at least partially extending into valley portion of the battery tube in-between the first and second cavities. The release buttons preferably are configured to have a larger surface area for contacting by the user without increasing the cross-sectional area or profile of the battery tube, thus contributing to the streamlined profile of the battery pack. By maximizing the surface area, the user is more readily able to contact and press the first and second release buttons, making it easier to remove the second end cap from the battery tube and thus easier to access the batteries located within the battery tube when they need replacement.

The inner sides of the first and second end caps may be configured to create equal length chambers so that the removable second end cap is agnostic with respect to orientation and thus may be inserted into the battery tube in any orientation.

In another example embodiment, a battery pack for use with a motorized architectural structure covering is disclosed. The battery pack may include a battery tube, a first end cap and a second end cap. The battery tube may include a first end, a second end, and first and second cavities interconnected via an intermediate valley portion, the first and second cavities arranged and configured to receive first and second rows of batteries, respectively, therein. The first cap may be coupleable to the first end of the battery tube. The second end cap may be coupleable to the second end of the battery tube. The second end cap may be removably coupleable to the second end of the battery tube. The second end cap may include first and second release buttons for engaging the battery tube adjacent the second end thereof. The first and second release buttons extending from top and bottom surfaces of the second end cap, at least a portion of the first and second release buttons extending into the valley portion of the battery tube in-between the first and second cavities. The first and second release buttons may have a wider portion adjacent the second end cap, and a narrower portion extending at least partially into the valley portion. The first and second release buttons may be inwardly tapered from the top and bottom surfaces, respectively.

In another example embodiment, a battery pack for use with a motorized architectural structure covering is disclosed. The battery pack may include a battery tube, a first end cap and a second end cap. The battery tube may include a first end, a second end, a first cavity arranged and configured to receive a first row of batteries therein, and a second cavity arranged and configured to receive a second row of batteries therein. The first end cap may be coupleable to the first end of the battery tube. The second end cap may be coupleable to the second end of the battery tube, the second end cap being removably coupleable to the second end of the battery tube. The first end cap may include a first spring for contacting and biasing the first row of batteries and a second spring for contacting and biasing the second row of batteries, the first and second springs may extend a substantially equal distance away from the first end cap. The second end cap may include an electrically conductive member arranged and configured to contact the first and second rows of batteries, the electrically conductive member extending a substantially equal distance away from the second end cap.

### BRIEF DESCRIPTION OF THE DRAWINGS

**FIG. 1** is an exploded front perspective view illustrating a prior art architectural structure covering assembly including a covering shown in an extended position;
**FIG. 2** is a front perspective view illustrating an example of a battery pack in accordance with an illustrative embodiment of the present disclosure;
**FIG. 3** is an alternate perspective view illustrating the battery pack shown in **FIG. 2****;**
**FIG. 4** is a cross-sectional view of an example embodiment of a battery tube used in connection with the battery pack shown in **FIG. 2****,** the cross-section view taken along line IV-IV in **FIG. 2****;**
**FIG. 5** is a perspective view illustrating an example embodiment of a first end cap used in connection with the battery pack shown in **FIG. 2****;**
**FIG. 5A** is a perspective view illustrating the first end cap shown in **FIG. 5****,** the first end cap incorporating a shim plate;
**FIG. 6** is a front, perspective view illustrating an example embodiment of a second end cap used in connection with the battery pack shown in **FIG. 2****;**
**FIG. 7** is an exploded rear, perspective view illustrating the second end cap shown in **FIG. 6****;**
**FIG. 8** is a partial, front perspective view of an alternate embodiment of a second end cap used in connection with the battery pack shown in **FIG. 2****;**
**FIG. 9** is a perspective view illustrating an alternate, example embodiment of an end cap portion that may be used in connection with the second end cap and battery pack shown in **FIG. 2****;**
**FIG. 10** is a perspective view illustrating the end cap portion shown in **FIG. 9** coupled to a second end cap; and
**FIG. 11** is a perspective view illustrating an alternate example embodiment of an end cap portion coupled to a second end cap.

### DETAILED DESCRIPTION

Embodiments of a battery pack for use in an architectural structure covering in accordance with the present disclosure will now be described more fully hereinafter with reference to the accompanying drawings, in which preferred embodiments of the present disclosure are presented. The battery pack of the present disclosure may, however, be embodied in many different forms and should not be construed as being limited to the embodiments set forth herein. Rather, these embodiments are provided so that this disclosure will convey certain example aspects of the covering to those skilled in the art. In the drawings, like numbers refer to like elements throughout unless otherwise noted.

The improved battery pack is adapted and configured to be used with a motorized architectural structure covering. The battery pack may include a battery tube for receiving one or more batteries therein. The battery pack may also include a first end cap coupled to a first end of the battery tube, and a second end cap coupled to a second end of the battery tube. The second end cap is preferably removably coupled to the second end of the battery tube to enable access to the plurality of batteries contained within the battery pack. The second end cap preferably includes one or more projections extending from an outer surface thereof for facilitating removal of the battery pack. In one example embodiment, the one or more projections may be in the form of first and second tabs to facilitate removal of the battery pack from one or more mounting clips associated with the motorized architectural structure covering. The first and second tabs preferably do not protrude beyond the transverse cross-sectional area of the second end cap, thus contributing to the battery pack having a slim profile. In another embodiment, the one or more projections may be in the form of an extension handle extending from an outer surface of said second end cap. The extension handle including an arcuate curvature so that, in use, the extension handle projects laterally away from and downward from the second end cap.

In one example embodiment, the battery tube preferably includes first and second cavities for receiving first and second rows of batteries, respectively. The first and second cavities being interconnected via an intermediate valley portion. The valley portion is preferably narrower than the first and second cavities. Meanwhile, the second end cap preferably includes first and second release buttons for releasably engaging the battery tube. The first and second release buttons preferably include a wider portion adjacent to the second end cap, and a narrower portion extending at least partially into the valley portion of the battery tube. The first and second release buttons preferably have a shape chosen from one of a triangular shape, or a trapezoidal shape, and may be inwardly tapered from top and bottom surfaces of the second end cap to facilitate easier manipulation for removing the second end cap from the battery tube to access the plurality of batteries located therein.

In addition, the first end cap may include a first spring for contacting and biasing the first row of batteries and a second spring for contacting and biasing the second row of batteries. The second end cap may further include an electrically conductive member arranged and configured to contact the first and second rows of batteries. For example, the second end cap may include first and second springs for contacting and biasing the first and second row of batteries, respectively. The first and second springs of the first end cap and the first and second springs of the second end cap both preferably extend an equal distance from the first and second end caps, respectively, so that the first and second cavities have substantially equal length chambers. In this manner, the second end cap is agnostic with respect to orientation and thus may be inserted into the battery tube in any orientation.

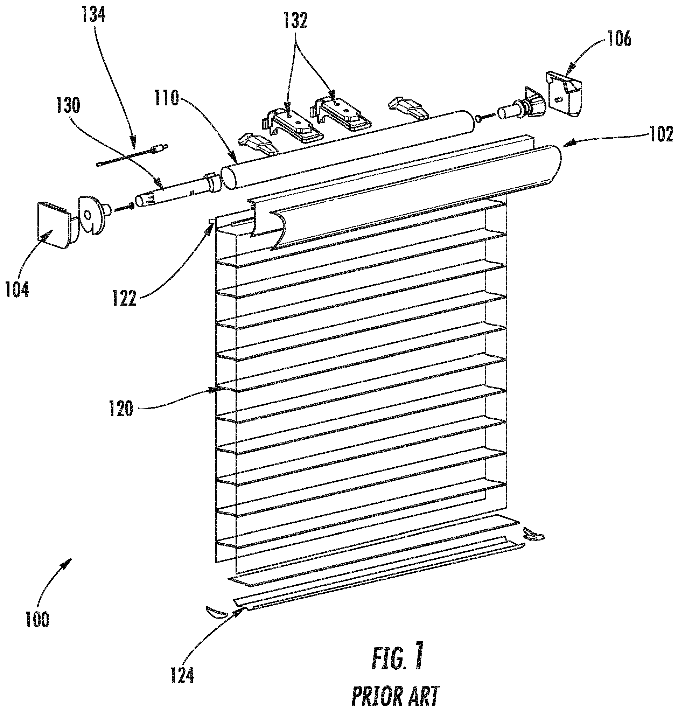

The battery pack of the present disclosure may be used in connection with any motorized architectural structure covering. For example, referring to **FIG. 1****,** an example of a motorized architectural structure covering **100** is illustrated. As shown, the architectural structure covering assembly **100** may include a headrail **102,** which in the illustrated embodiment includes opposed end caps **104, 106.** The architectural structure covering **100** may also include mounts (not shown) for mounting the architectural structure covering assembly **100** to a wall or other structure. Although a particular example of a headrail **102** is shown in **FIG. 1****,** many different types and styles of headrails exist and could be employed in place of the example headrail of **FIG. 1****.**

The architectural structure covering assembly **100** may also include a rotating member **110** (e.g., a roller tube for a roller shade or a lift rod for a stackable shade), and a covering **120.** In the illustrated example, the covering **120** has an upper edge **122** mounted to the rotating member **110** and a lower, free edge **124.** As will be readily appreciated by one of ordinary skill in the art, the covering **120** of the architectural structure covering **100** may be configured to be vertically extended and retracted relative to the head rail **102** between an extended position (shown in **FIG. 1****),** wherein the covering **120** may partially or entirely cover a window, a doorway, a skylight, a hallway, a portion of a wall, etc., and a retracted position, wherein the covering **120** may be retracted into, and substantially hidden within, the head rail **102** (e.g., behind a fascia of the head rail).

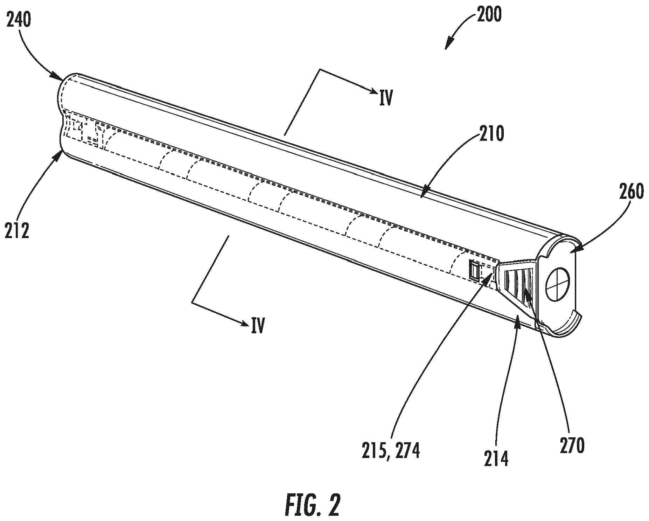

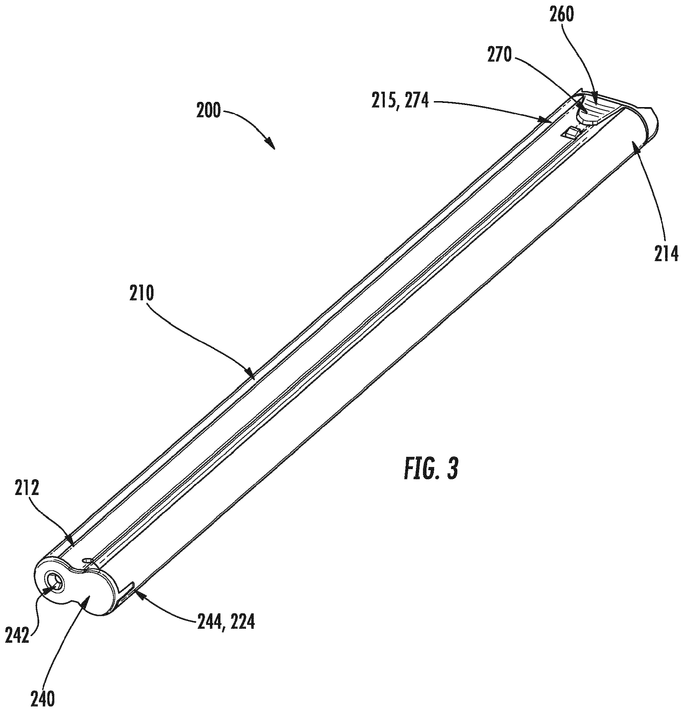

Referring to **FIGS. 2** and **3****,** perspective views of a battery pack **200** according to an example embodiment of the present disclosure will now be described. In use, the battery pack **200** is sized and configured to be electrically connected to the motor **130 (****FIG. 1****).** The battery pack **200** may be located anywhere with respect to the architectural structure covering **100.** In one example embodiment, referring to **FIG. 1****,** the architectural structure covering **100** may include brackets **132** for coupling the battery pack **200** to the architectural structure covering **100.** As shown, in accordance with an illustrative, non-limiting embodiment of the present disclosure, the battery pack **200** may include a battery tube **210,** and first and second end caps **240, 260** located on either end of the battery tube **210.** A cable **134** may be provided for coupling and transferring electrical DC energy from the battery pack **200** to the motor **130.** For example, the battery pack **200** may include an electrical port **242** for connecting to the cable **134.** The port **242** may be located within the first end cap **240,** although it is envisioned that the port **242** may be located anywhere on the battery pack **200.**

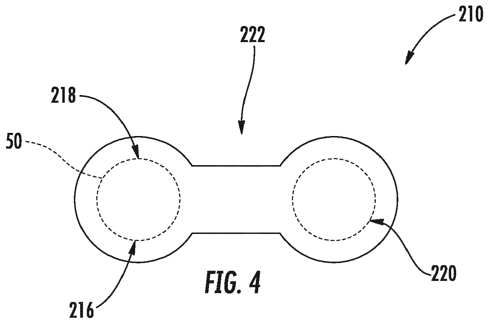

Referring to **FIGS. 2-4****,** the battery tube **210** may have a generally elongated rectangular or tubular shape, although other shapes are contemplated. The battery tube **210** has a first end **212** for receiving the first end cap **240,** a second end **214** for receiving the second end cap **260,** and an internal cavity **216 (****FIG. 4****)** sized and configured to receive one or more batteries **50** therein. In one example embodiment, the battery tube **210** may include first and second cavities **218, 220** separated by a narrower valley portion **222,** although other shapes are contemplated. The first and second cavities **218, 220** may be configured to receive any number and type of batteries **50** required. Preferably, the first and second cavities **218, 220** are configured to receive first and second rows of batteries **50,** respectively. For example, the first and second cavities **218, 220** may be configured to receive first and second rows of batteries, respectively, with each row containing six batteries. As will be appreciated by one of ordinary skill in the art, the battery tube **210** may be configured to contain more or fewer batteries, and more or fewer rows of batteries. In addition, the battery tube **210** may be configured to receive any type of battery, for example, AA, AAA, C, or D batteries. In use, the batteries **50** are inserted into the first and second cavities **218, 220** of the battery tube **210.**

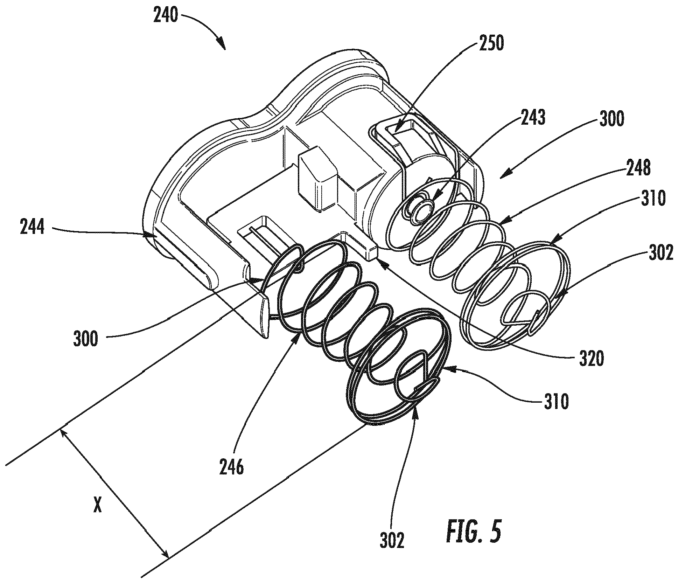

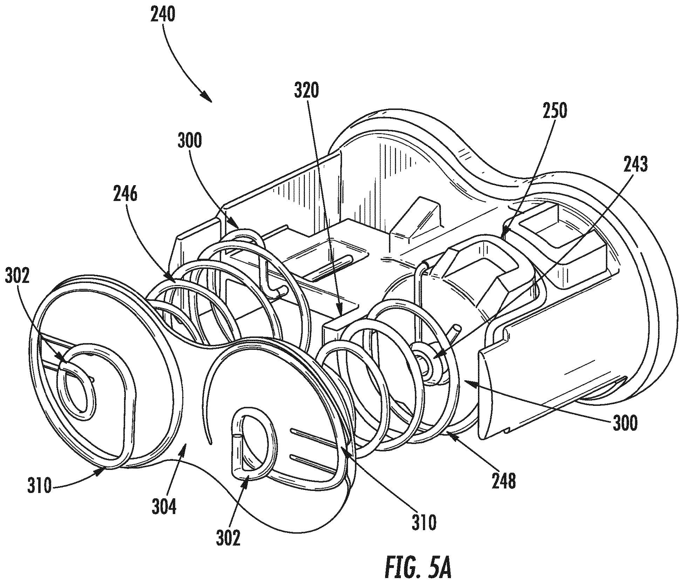

Referring to **FIG. 5****,** a perspective view of an example embodiment of the first end cap **240** according to the present disclosure is illustrated. The first end cap **240** is preferably fixedly securable to the first end **212** of the battery tube **210.** That is, once connected to the battery tube **210,** the first end cap **240** is arranged and configured so that it is not easily removed from the battery tube **210,** although it is envisioned that the first end cap **240** may be removably coupled to the battery tube **210.** The first end cap **240** may be arranged and configured so that it can only be inserted into the first end **212 (****FIG. 3****)** of the battery tube **210** in a single orientation. For example, as shown, the first end cap **240** may include a projection **244** for engaging a recess **224** formed near the first end **212** of the battery tube **210.** In this manner, the first end cap **240** can only be inserted into the first end **212** of the battery tube **210** when the projection **244** is properly aligned with the recess **224** formed in the battery tube **210.** It should be understood that any other mechanism for ensuring proper alignment of the first end cap **240** relative to the first end of the battery tube **210** may be used.

The first and second cavities **218, 220** are preferably configured to create substantially equal length chambers. This may be accomplished by any mechanism. As shown in **FIG. 5****,** the first end cap **240** may include a first spring **246** for contacting and biasing the batteries **50** located in the first cavity **218** toward the second end cap **260.** Generally speaking, in known prior art devices, the batteries **50** located in the second cavity **220** would directly contact an electrical terminal **243** extending through the electrical port **242.** However, according to one aspect of the present disclosure, the first end cap **240** may include a second spring **248** positioned and configured to contact and bias the batteries **50** located in the second cavity **220.** The second spring **248** electrically engages the electrical terminal **243** so that electrical DC energy can be transferred from the batteries **50** through the second spring **248** to the electrical terminal **243** to the cable **134 (****FIG. 1****)** and to the electrical motor **130.** That is, the second spring **248** is in electrical continuity with the electrical terminal **243** for transferring power thereto. As shown, the first and second springs **246, 248** are arranged and configured so that they preferably extend an equal distance **X** from the first end cap **240.** In addition, the first and second springs **246, 248** are arranged and configured so that they preferably apply an equal amount of biasing force to the batteries. That is, the first spring **246** preferably has a first length, the second spring **248** preferably has a second length, the first and second lengths being arranged and configured so that the first and second springs **246, 248** extend an equal distance **X** from the first end cap **240,** and thus extend an equal distance into the first and second cavities **218, 220.** In this manner, by extending the first and second springs **246, 248** into the first and second cavities **218, 220** an equal distance **X** from the first end cap **240** helps facilitate the creation of equally length chambers.

As shown in **FIG. 5****,** in one embodiment, the first and second springs **246, 248** may each be in the form of a coil spring, although other forms are envisioned. The first and second springs **246, 248** may each include a first end **300** adjacent to the first end cap **240** and a second end **302** configurable for contacting the batteries **50** when inserted into the first and second cavities **218, 220,** respectively, of the battery pack **200.** The first and second springs **246, 248** preferably include a stabilizing mechanism for maintaining the stability of the first and second springs **246, 248** as they are being axially compressed by the batteries **50** being inserted into the first and second cavities **218, 220,** respectively. The stabilizing mechanism preferably operates to ensure that the first and second springs **246, 248** do not contact each other, which would result in an electrical short. As shown, the stabilizing mechanism may be in the form of an enlarged diameter coil **310** formed in each of the first and second coiled springs **246, 248** adjacent the second ends **302** thereof. In one embodiment, the enlarged diameter coil **310** preferably has an outer diameter substantially similar to the outer diameter of the batteries **50** being inserted into the battery pack **200.** In this manner, the larger diameter **coil 310** ensures that the first and second springs **246, 248** are axially compressed via the batteries **50** and that the first and second springs **246, 248** do not bend and extend laterally into the cavity area between the first and second rows of batteries **50.** In addition, the first end cap **240** may include a stabilizing and insulating feature **320** that prevents the first and second coiled springs **246, 248** from contacting each other when compressed. As shown, the stabilizing and insulating feature **320** may be in the form of a projection extending from the inner surface of the first end cap **240** into at least a portion of the space between the first and second springs **246, 248.**

Moreover, referring to **FIG. 5A****,** the stabilizing mechanism may incorporate an insulating plate **304** for coupling to the first and second springs **246, 248** to ensure that the first and second springs **246, 248** do not contact one another during axially compression of the first and second springs **246, 248** via the batteries **50.** As illustrated, the insulating plate **304** may be coupled to the first and second springs **246, 248** via the larger diameter coils **310** formed in each of the first and second coiled springs **246, 248** adjacent to the second ends **302** thereof, although it is envisioned that the insulating plate **304** may be coupled to the first and second springs **246, 248** by any other mechanism. In use, the insulating plate **304** may be manufactured from any suitable insulating material and formed by any mechanism. In one example embodiment, the insulating plate **304** may be in the form of a flat plate member made from die cut insulation material.

The first and second springs **246, 248** may be coupled to the first end cap **240** by any means now known or hereafter developed. As shown, in one example embodiment, the first spring **246** may be molded into the first end cap **240** while the second spring **248** may be removably coupled to the first end cap **240** such as, for example, by extending around a projection or hook **250** formed on the first end cap **240.** It will be appreciated that these are examples of connection arrangements, and that others can be used.

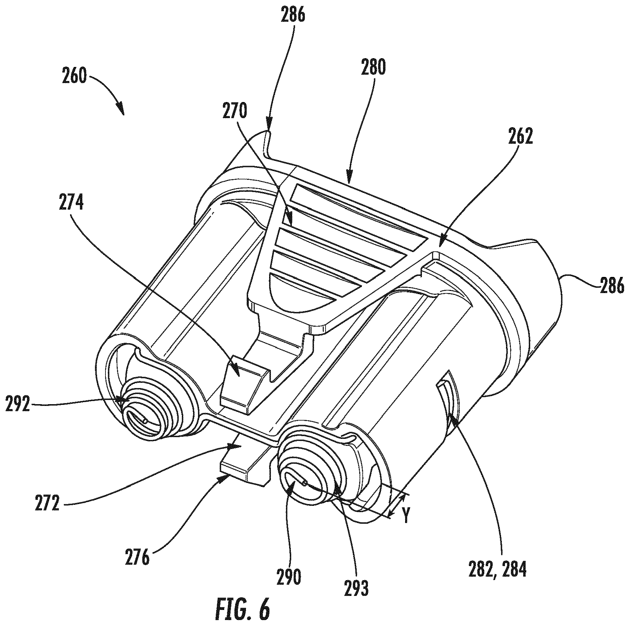

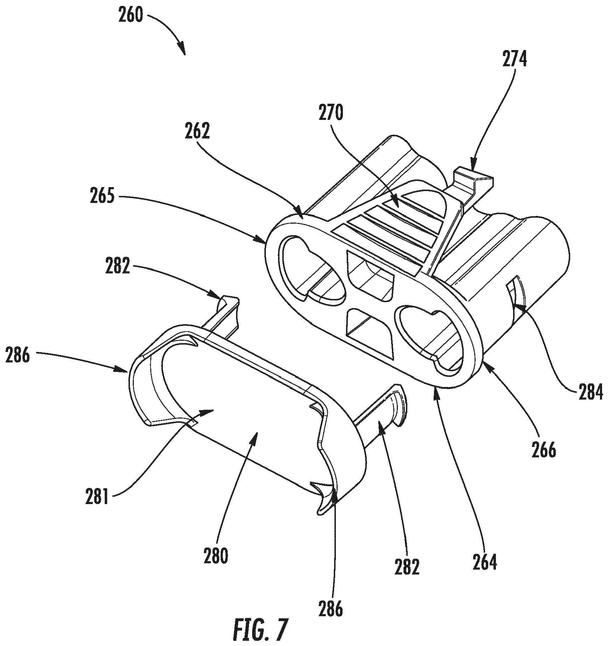

Referring to **FIGS. 6** and **7****,** perspective views of an example embodiment of the second end cap **260** according to the present disclosure is illustrated. The second end cap **260** is preferably removably couplable to the second end **214 (****FIG. 2****)** of the battery tube **210.** That is, once connected to the battery tube **210,** the second end cap **260** is arranged and configured so that it can be relatively easily removed from the battery tube **210** so that the user can access the batteries **50** as needed, for example, to replace the batteries when required. The second end cap **260** can then be recoupled to the battery tube **210** once the batteries **50** have been replaced. The second end cap **260** is preferably arranged and configured so that it can be inserted into the second end **214** of the battery tube **210** in one of two orientations. That is, as will be described in greater detail below, the second end cap **260** is preferably arranged and configured so that it can be inserted into the second end **214** of the battery tube **210** either right-side up or upside down.

The second end cap **260** may be removably couplable to the second end **214** of the battery tube **210** by any mechanism now known or hereafter developed. As shown, the second end cap **260** may include first and second release buttons **270, 272.** The first and second release buttons **270, 272** may include first and second engaging members **274, 276,** respectively, for engaging correspondingly shaped recesses **215** formed in the battery tube **210** adjacent the second end **214** thereof. For example, the first and second engaging members **274, 276** may be in the form of first and second hooks for engaging recesses **215** formed in the battery tube **210.**

The first and second release buttons **270, 272** may extend from top and bottom surfaces **262, 264** of the second end cap **260.** Preferably, the first and second release buttons **270, 272** are arranged and configured so that when the second end cap **260** is coupled to the second end **214** of the battery tube **210,** a portion of each of the first and second release buttons **270, 272** is extendible into the valley portion **222** of the battery tube **210,** in-between the first and second cavities **218, 220,** when the user presses the first and second release buttons **270, 272** toward each other. The first and second release buttons **270, 272** preferably have a shape chosen from one of a triangular shape, or trapezoidal shape. Alternatively, the first and second release buttons **270, 272** can have any other shape including, but not limited, to a square shape, or a rectangular shape. More preferably, the first and second release buttons **270, 272** are inwardly tapered from the top and bottom surfaces **262, 264** of the second end cap **260** toward the first and second engaging members **274, 276.** In this manner, the first and second release buttons **270, 272** provide the user with a more ergometric push-button with a larger surface area for contacting the first and second release buttons **270, 272.** That is, as shown, the first and second release buttons **270, 272** preferably have a wider portion adjacent to the second end cap **260,** and a narrower portion toward the first and second engaging members **274, 276,** so that at least a portion of the first and second release buttons **270, 272** can extend at least partially into the valley portion **222** of the battery tube **210** when the release buttons **270, 272** are pressed. In this manner, the release buttons **270, 272** have a larger surface area for contacting by the user without increasing the cross-sectional area or profile of the battery tube **210,** thus contributing to the streamlined profile of the battery pack **200.** By maximizing this surface area, the user is more readily able to contact and press the first and second release buttons **270, 272,** making it easier to remove the second end cap **260** from the battery tube **210** and thus easier to access the batteries **50** located within the battery tube **210** when they need replacement. As will be readily appreciated by one of ordinary skill in the art, pressing the first and second release buttons **270, 272** toward each other causes the first and second engaging members (e.g., hooks) **274, 276** to move inwards away from the outer surface of the battery tube **210** and thus out of engagement with the recesses **215** formed in the battery tube **210,** thereby releasing the second end cap **260** from the battery tube **210.**

Referring to **FIG. 7****,** the second end cap **260** may also include an end cap portion **280.** The end cap portion **280** may be coupled to the second end cap **260** by any means now known or hereafter developed including, for example, integrally formed, an adhesive, fasteners, etc. As shown, the end cap portion **280** may include first and second legs and projections **282** for engaging recesses **284** formed in the second end cap **260.** In one example embodiment, the first and second legs and projections **282** may extend in a longitudinal direction (e.g., parallel to the longitudinal direction of the battery pack **200).** The end cap portion **280** preferably also includes first and second tabs **286** extending from an outer surface **281** of the end cap portion **280.** In one example embodiment, the first and second tabs **286** may extend in a longitudinal direction (e.g., parallel to the longitudinal direction of the battery pack **200).** In the illustrated embodiment, the first and second legs and projections **282** extend in a direction opposite that of the first and second tabs **286.** In this manner, the first and second tabs **286** preferably do not protrude beyond the transverse cross-sectional area of the second end cap **260,** thus providing the battery pack **200** with a slim profile. The first and second tabs **286** may have any shape. As shown, in one example embodiment, the first and second tabs **286** each have a semi-circular cross-sectional shape substantially corresponding to the semi-circular cross-sectional shape of the second end cap **260** and the semi-circular cross-sectional shape of the first and second cavities **218, 220** of the battery tube **210.** That is, the second end cap **260** may include first and second curved side edges **265, 266.** The first and second tabs **286** preferably include a semi-circular cross-sectional shape that substantially corresponds to the first and second curved side edges **265, 266** of the second end cap **260.**

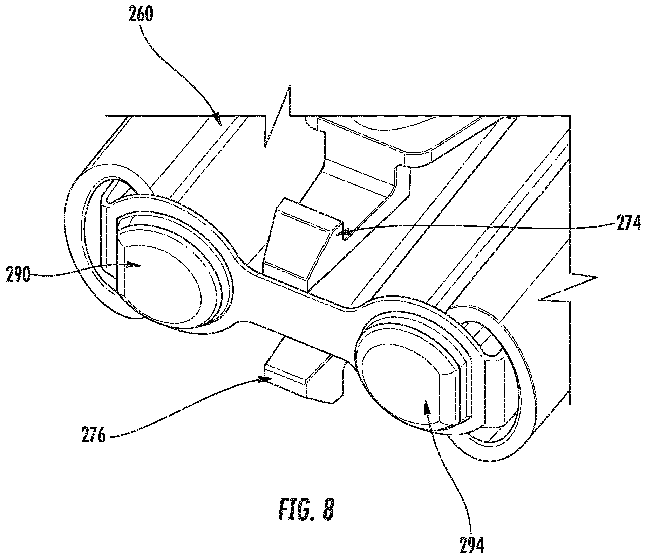

In use, the first and second tabs **286** facilitate removal of the battery pack **200,** for example, from the mounting clips **132.** That is, as previously described and referring to **FIG. 1****,** the battery pack **200** may be coupled to the architectural structure covering **100** behind the headrail **102,** and optionally behind the covering **120,** so that the battery pack **200** is concealed. By concealing the battery pack **200** behind the headrail **102,** and optionally behind the covering **120** as well, accessing and removing the battery pack **200** is rendered more difficult, especially since it takes more power to raise the covering **120** than lowering the covering **120,** which tends to result in the batteries **50** being more likely to be depleted when the covering **120** is in the extended position, and thus requiring the user to reach behind the extended covering **120** and the headrail **102** to access the battery pack **200.** The first and second tabs **286** enable the user to more easily access and contact, catch, or latch onto the battery pack **200,** to pivot the battery pack **200** downwards and disengage the battery pack **200** from the clips **132.**The second end cap **260** may also include an electrically conductive member **290** so that the batteries **50 (****FIG. 4****)** in the first cavity **218** are serially connected to the batteries **50** located in the second cavity **220.** As shown, the electrically conductive member **290** may include first and second springs **292, 293** for contacting and biasing the batteries **50** located in the first and second cavities **218, 220,** respectively, toward the first end cap **240.** In use, as previously described in connection with the first end cap **240,** the first spring **292** preferably has a first length, the second spring **293** preferably has a second length, the first and second lengths being arranged and configured so that the first and second springs **292, 293** extend an equal distance **Y** from the second end cap **260,** and thus extend an equal distance into the first and second cavities **218, 220.** Alternatively, referring to **FIG. 8****,** the electrically conductive member **290** may be in the form of a plate **294.** The electrically conductive member **290** may be coupled to the second end cap **260** by any means now known or hereafter developed. By utilizing an electrically conductive member **290** to couple the batteries **50** in the first cavity **218** with the batteries **50** in the second cavity **220,** the batteries **50** become serially electrically connected with one another. In addition, the second end cap **260** becomes agnostically arranged with respect to the batteries **50** and the battery tube **210.** That is, the electrically conductive member **290** is preferably arranged and configured so that it extends an equal distance **Y** from the second end cap **260** into the first and second cavities **218, 220.** For example, the first and second springs **292, 293** extend an equal distance **Y** from the second end cap **260** (e.g., extend an equal distance **Y** into the first and second cavities **218, 220,** respectively). In this manner, the second end cap **260** can be inserted in either of two orientations (e.g., with the first spring **292** located in the first cavity **218,** or with the first spring **292** in the second cavity **220)** and yet still maintain a proper electrical connection. In this manner, by extending the first and second springs **292, 293** an equal distance **Y** from the second end cap **260** into the first and second cavities **218, 220,** respectively and by extending the first and second springs **246, 248** into the first and second cavities **218, 220** an equal distance **X** from the first end cap **240,** substantially equally length chambers may be created.

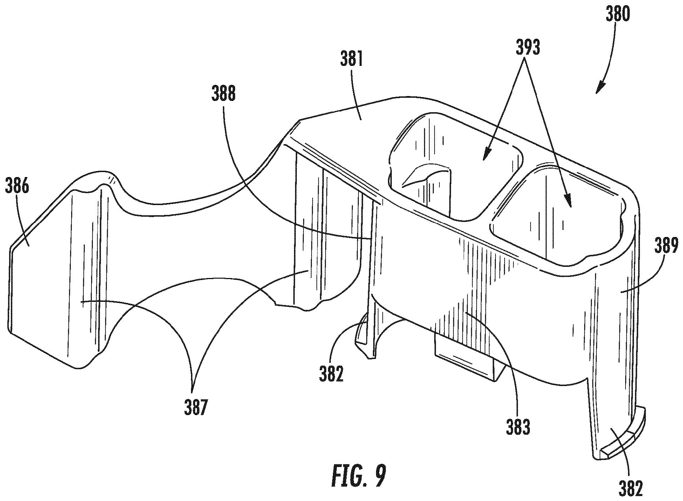

As previously mentioned in connection with **FIG. 7****,** the second end cap **260** may also include an end cap portion **280.** The end cap portion **280** may be coupled to the second end cap **260** by any means now known or hereafter developed including, for example, integrally formed, an adhesive, fasteners, etc. Referring now to **FIGS. 9-11****,** in one embodiment, an alternative embodiment of an end cap portion **380** may include a body portion **383** for coupling to the second end cap **360.** For example, as illustrated, a portion of the body portion **383** may be sized and configured to be received within an opening **362** formed in the second end cap **360.** In addition, the body portion **383** of the end cap portion **380** may include first and second legs and projections **382** for engaging recesses **364** formed in the second end cap **260.** In the illustrated embodiment, the first and second legs and projections **382** extend in a longitudinal direction (e.g., parallel to the longitudinal direction of the battery pack **200).**

The end cap portion **380** preferably also includes an extension handle **386** extending from a side surface of an outer, end surface **381** of the end cap portion **380.** Alternatively, the extension handle **386** may extend from a portion of the body portion **383** not received within the opening **362** formed in the second end cap **360.** In one example embodiment, the extension handle **386** may have an arcuate shape extending laterally outward and away from the body of the end cap portion **380** so that, in use (e.g., when coupled to the battery pack **200** via the second end cap **360),** the extension handle **386** projects laterally away from, and downward from, the second end cap **360.** In this manner, the extension handle **386** preferably protrudes beyond the transverse cross-sectional area of the second end cap **360,** thus facilitating easier access to a user attempting to locate and remove the battery pack **200.** As illustrated, in one example embodiment, the extension handle **386** may have an hourglass shape to facilitate grasping by the user. However, it should be understood that the extension handle **386** may have any other shape. In addition, and/or alternatively, the extension handle **386** may include one or more ribs **387** formed on an inner surface of the handle **386.** In use, the ribs **387** also facilitate grasping by the user. It should be noted that while the extension handle **386** is illustrated with two ribs **387,** the extension handle may include more or less ribs, and that the ribs **387** may be omitted in their entirety. In use, the one or more ribs **387** increase the rigidity of the extension handle **386.**

Moreover, as illustrated, the end cap portion **380** may incorporate one or more openings **393** formed therein. It should be noted that while the end cap portion **380** is illustrated with two separate and distinct openings **393,** the end cap portion **380** may include more or less openings, and that the openings may be omitted in their entirety.

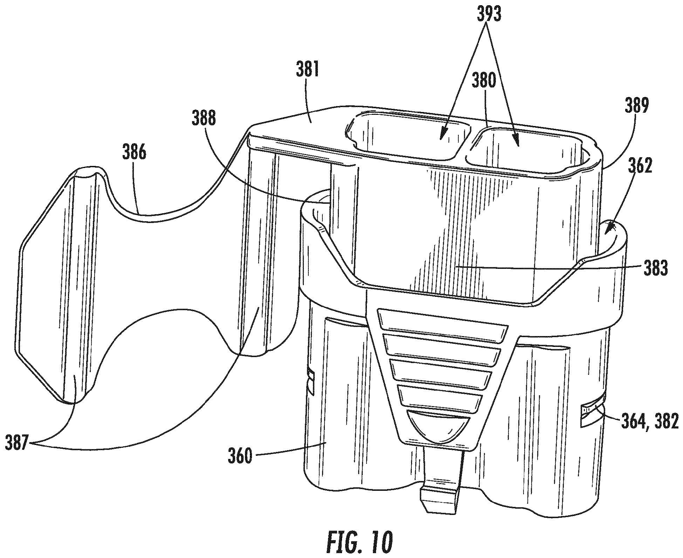

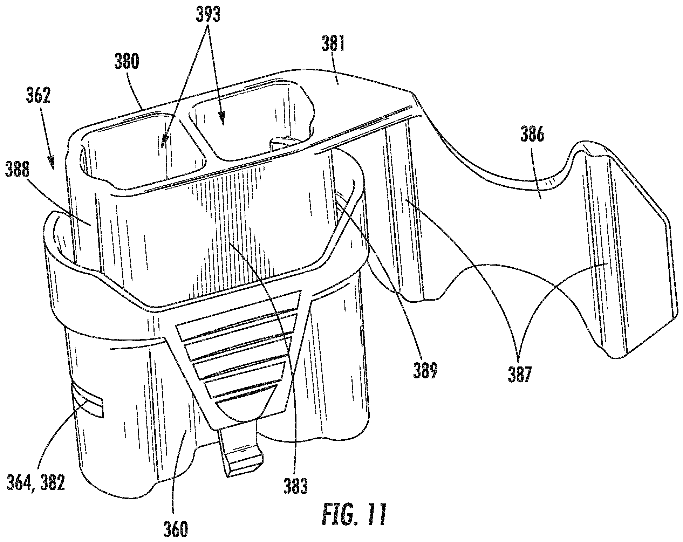

Referring to **FIGS. 9** and **10****,** in use, the extension handle **386** may laterally extend from a left-hand side **388** of the end cap portion **380.** Alternatively, referring to **FIG. 11****,** in use, the extension handle **386** may laterally extend from a right-hand side **389** of the end cap portion **380.** It will also be understood that the extension handle **386** could, alternatively extend from any surface of the end cap portion **380** in order to provide a desired grippable surface in use. The particular end cap portion **380** used may depend on the orientation of the architectural-structure covering **100.**

It should be noted, that while the second end cap portion **380** has been described and illustrated as including a single extension handle **386,** it is envisioned that the second cap portion **380** may include two or more extension handles. In addition, or alternatively, while the extension handle **386** has been described as having an hourglass or arcuate shape so that the extension handle **386** projects laterally away from, and downward from, the second end cap **360,** it is envisioned that the extension handle **386** may have any desired shape that will facilitate a user grasping the handle **386.** In addition, or alternatively, while the extension handle **386** has been described and illustrated as being integrally formed with the end cap portion **380,** the extension handle **386** may be separately formed and coupled to the end cap portion **380** by any means now known or hereafter developed including, for example, an adhesive, fasteners, etc. In addition, or alternatively, while the end cap portion **380** has been described and illustrated as being separately formed with respect to the second end cap **360,** the end cap portion **380** may be integrally formed with the second end cap **360.**

In use, the extension handle **386** facilitates removal of the battery pack **200,** for example, from the mounting clips **132,** by allowing a user to grasp the extension handle **386** and pivot the battery pack **200** out of engagement with the mounting clips **132.** That is, as previously described and referring to **FIG. 1****,** the battery pack **200** may be coupled to the architectural structure covering **100** behind the headrail **102,** and optionally behind the covering **120,** so that the battery pack **200** is concealed. By concealing the battery pack **200** behind the headrail **102,** and optionally behind the covering **120** as well, accessing and removing the battery pack **200** is rendered more difficult, especially since it takes more power to raise the covering **120** than lowering the covering **120,** which tends to result in the batteries **50** being more likely to deplete when the covering **120** is in the extended position, thus requiring the user to reach behind the extended covering **120** and the headrail **102** to access the battery pack **200.** By incorporating the extension handle **386,** the user can more easily access and contact, catch, or latch onto the battery pack **200,** to pivot the battery pack **200** downwards to disengage the battery pack **200** from the clips **132.**

By utilizing a battery pack **200** according to the present disclosure, the battery pack **200** is more readily removed from the architectural structure covering assembly for replacement. In addition, the second or removable end cap **260** is easier to remove than prior end caps, and the second or removable end cap **260** can be coupled to the battery tube **210** in either orientation due to the design of the electrically conductive members.

It should be noted that while certain embodiments described herein refer to certain orientations and directions, it should be understood that any orientation or direction of implementation could be used and still fall within the described embodiments. Furthermore, it should also be understood that the directions (e.g. top, bottom, left, right, front, back, up and down) described herein are used for ease of description, and refer only to directions associated with the views illustrated in the corresponding figures.

As used herein, an element or step recited in the singular and proceeded with the word "a" or "an" should be understood as not excluding plural elements or steps, unless such exclusion is explicitly recited. Furthermore, references to "one embodiment" of the present disclosure are not intended to be interpreted as excluding the existence of additional embodiments that also incorporate the recited features.

While the present disclosure makes reference to certain embodiments, numerous modifications, alterations and changes to the described embodiments are possible without departing from the sphere and scope of the present disclosure, as defined in the appended claim(s). Accordingly, it is intended that the present disclosure not be limited to the described embodiments, but that it has the full scope defined by the language of the following claims, and equivalents thereof.

## Claims

1. A battery pack for use with a motorized architectural structure covering, said battery pack comprising:
a battery tube having a first end, a second end, and at least one cavity arranged and configured to receive a plurality of batteries therein;
a first end cap coupleable to said first end of said battery tube; and
a second end cap coupleable to said second end of said battery tube, said second end cap being removably coupleable to said second end of said battery tube;
wherein said second end cap includes one or more projections extending from an outer surface thereof for facilitating removal of the battery pack.

2. The battery pack of claim 1, wherein said one or more projections are first and second tabs, said first and second tabs extending in a longitudinal direction with respect to said outer surface of said second end cap; said first and second tabs facilitating removal of said battery pack from one or more mounting clips associated with the motorized architectural structure covering.

3. The battery pack of claim 1 or 2, wherein said at least one cavity includes first and second cavities interconnected via an intermediate valley portion, said valley portion being narrower than said first and second cavities; said first cavity is arranged and configured to receive a first row of batteries, and the second cavity is arranged and configured to receive a second row of batteries.

4. The battery pack of claim 3, wherein said second end cap includes first and second release buttons having first and second engaging members, respectively, for releasably engaging first and second recesses formed in said battery tube adjacent said second end thereof.

5. The battery pack of claim 4, wherein said first and second release buttons extend from top and bottom surfaces, respectively, of said second end cap, said first and second release buttons each including a portion that is extendable into said valley portion of said battery tube in-between said first and second cavities when said second end cap is coupled to said battery tube.

6. The battery pack of claim 5, wherein said first and second release buttons have a wider portion adjacent the second end cap and a narrower portion extendable into said valley portion of said battery tube; said first and second release buttons being inwardly tapered from said top and bottom surfaces of said second end cap.

7. The battery pack of any one of claims 1 to 6, wherein said one or more projections are first and second tabs, said first and second tabs extending from an outer surface of an end cap portion, said end cap portion being coupleable to said second end cap.

8. The battery pack of any one of claims 1 to 7, wherein said second end cap further includes first and second springs arranged and configured to contact first and second rows of batteries, respectively; said first and second springs being in electrical contact with each other.

9. The battery pack of claim 8, wherein the first spring member has a first length and the second spring member has a second length, the first and second lengths being arranged and configured so that the first and second spring members extend an equal distance from the second end cap.

10. The battery pack of any one of claims 1 to 9, wherein said second end cap further includes an electrically conductive plate member arranged and configured to contact first and second rows of batteries.

11. The battery pack of any one of claims 1 to 10, wherein said first end cap includes a first spring for contacting and biasing a first row of batteries and a second spring for contacting and biasing a second row of batteries; said first and second springs extend an equal distance away from said first end cap.

12. The battery pack of claim 11, wherein said first and second springs are each a coiled spring having a first end adjacent to said first end cap and a second end arranged and configured to contact first and second batteries, respectively, said first and second coiled springs each including a larger diameter coil formed in said first and second coiled springs adjacent said second ends thereof for contacting the first and second batteries, respectively.

13. The battery pack of claim 12, wherein said first end cap further includes a stabilizing and insulating feature for preventing said first and second coiled springs from contacting each other when compressed, said stabilizing and insulating feature being a projection extending from an inner surface of said first end cap into at least a portion of a space positioned between said first and second coiled springs.

14. The battery pack of claim 13, further comprising an insulating plate for coupling to an end of said first and second coiled springs to prevent said first and second coiled springs from contacting each other.

15. The battery pack of any one of claims 1 to 14, wherein said one or more projections include an extension handle extending from an outer surface of said second end cap, said extension handle includes an arcuate curvature so that, in use, said extension handle projects laterally away from and downward from the second end cap.
